(19) Europäisches Patentamt
European Patent Office
Office européen des brevets

(11) **EP 4 579 455 A1**

(12) **EUROPEAN PATENT APPLICATION**

(43) Date of publication:
**02.07.2025 Bulletin 2025/27**

(21) Application number: **24215913.5**

(22) Date of filing: **27.11.2024**

(51) International Patent Classification (IPC):
**G06F 9/48** (2006.01)  **G06F 9/50** (2006.01)
**H04L 47/83** (2022.01)

(52) Cooperative Patent Classification (CPC):
**G06F 9/5027; G06F 9/4881; G06F 9/505;**
G06F 2209/501; G06F 2209/503; G06F 2209/508;
G06F 2209/509; H04L 47/83

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.12.2023 US 202318400349**

(71) Applicant: **Juniper Networks, Inc.
Sunnyvale, CA 94089-1206 (US)**

(72) Inventors:
• **KRISHNAMURTHY, Pradeep H.
Sunnyvale, 94089 (US)**

• **R, Manju
Sunnyvale, 94089 (US)**
• **ESWARAN, Thiraviya
Sunnyvale, 94089 (US)**
• **DESHMUKH, Raviraj Satish
Sunnyvale, 94089 (US)**
• **BANIK, Tanisha
Sunnyvale, 94089 (US)**
• **SINGH, Ishmeet
Sunnyvale, 94089 (US)**

(74) Representative: **D Young & Co LLP
3 Noble Street
London EC2V 7BQ (GB)**

(54) **TASK DISTRIBUTION BASED ON FEEDBACK**

(57) Job management solutions often involve a controller distributing tasks to worker nodes or worker nodes in an efficient manner. In one example, this disclosure describes a method that includes receiving, by a controller, a first set of tasks; assigning, by the controller, each of the tasks in the first set of tasks to worker nodes for processing by the worker nodes; receiving, by the controller and for at least some of the tasks in the first set of tasks, feedback information; determining, by the controller and based on the feedback information, an expected amount of processing associated with each task type in the plurality of task types; receiving, by the controller, a second set of tasks; and assigning, by the controller and based on the expected amount of processing associated with each task type, each of the tasks in the second set of tasks to the worker nodes for processing.

FIG. 1

**EP 4 579 455 A1**

**Description**

This application claims the benefit of US Patent Application No. 18/400,349, filed December 29, 2023, the entire contents of which is incorporated herein by reference.

**TECHNICAL FIELD**

This disclosure relates to computing systems, and more specifically, to techniques for distributing tasks in a task or job management framework.

**BACKGROUND**

In a typical task management framework, a controller distributes tasks and/or workloads to compute nodes for execution, and attempts to efficiently use available computing resources. Tasks might be distributed based on information such as memory usage or CPU usage of compute nodes included within the computing resources. Also, in some cases, tasks might be distributed pursuant to a partitioning system (e.g., Apache Kafka) in which tasks to be performed are divided up or partitioned before being distributed across available compute nodes.

Task management frameworks can be helpful in various contexts, including when collecting data, such as in the context of providing full stack observability by, for example, integration with various Application Performance Monitoring tools and performing cross-layer analytics in a data center or other computing environment. In such contexts, a controller may collect data from hardware and software systems within a data center. Often, the data to be collected is voluminous, which presents challenges.

**SUMMARY**

Particular aspects are set out in the appended independent claims. Various optional embodiments are set out in the dependent claims.

This disclosure describes techniques for distributing tasks to computing resources in a computing environment, such as a multitenant data center. In general, at least some of the techniques described here may be understood as improvements to processes for distributing tasks in a task management framework.

Task management solutions generally involve a controller distributing tasks to worker nodes or compute nodes in an efficient manner. Techniques described herein provide the controller with improved visibility into the work being performed by worker nodes or compute nodes, which allows the controller to more effectively distribute tasks to the nodes. As described herein, a controller gains such visibility through feedback received from the worker nodes or compute nodes. Based on this feedback, the controller learns, over time, how to accurately assess the amount of computing resources required to complete a given type of task. The controller may also learn, over time, how to accurately assess the workloads of nodes available for performing tasks. As a result of evaluating feedback about tasks completed and how the feedback differs depending on task type, the controller is in a better position to efficiently distribute new tasks to available nodes.

In some examples, this disclosure describes operations performed by a computing system in accordance with one or more aspects of this disclosure. In one specific example, this disclosure describes a method comprising receiving, by a controller, a first set of tasks, wherein each task in the first set of tasks has a task type that is one of a plurality of task types; assigning, by the controller, each of the tasks in the first set of tasks to worker nodes for processing by the worker nodes; receiving, by the controller and for at least some of the tasks in the first set of tasks, feedback information about the processing by the worker nodes; determining, by the controller and based on the feedback information, an expected amount of processing associated with each task type in the plurality of task types; receiving, by the controller, a second set of tasks, wherein each task in the second set of tasks has a task type that is one of the plurality of task types; and assigning, by the controller and based on the expected amount of processing associated with each task type, each of the tasks in the second set of tasks to the worker nodes for processing.

In another example, this disclosure describes a system comprising a storage system and processing circuitry having access to the storage system, wherein the processing circuitry is configured to carry out operations described herein. In yet another example, this disclosure describes a computer-readable storage medium comprising instructions that, when executed, configure processing circuitry of a computing system to carry out operations described herein.

**BRIEF DESCRIPTION OF THE DRAWINGS**

FIG. 1 is a conceptual diagram illustrating an example system for distributing tasks in a job management framework in a data center, in accordance with one or more aspects of the present disclosure.

FIG. 2 is a block diagram illustrating an example system for distributing tasks to worker nodes in a computing environment, in accordance with one or more aspects of the present disclosure.

FIG. 3 is a flow diagram illustrating operations performed by an example controller, in accordance with one or more aspects of the present disclosure.

## DETAILED DESCRIPTION

This disclosure outlines techniques that include providing a controller in a task management framework with better visibility into the work being performed by worker nodes or compute nodes. This visibility enables the controller to more effectively distribute tasks to nodes. Such techniques improve upon conventional techniques in which a controller uses only externally visible information, such as CPU utilization and memory usage, when assigning tasks to worker or compute nodes. As described herein, a worker node may correspond to a virtual execution instance executing on a compute node. In such an example, multiple worker nodes may execute on a single compute node (e.g., as multiple pods executing on a Kubernetes compute node). Although techniques are described herein primarily in terms of worker nodes executing as instances on compute nodes, the techniques described herein may apply in other contexts. Such other contexts may include distribution of work across compute nodes or across computing resources in other computing architectures or arrangements.

As described herein, a controller may learn to make accurate assessments about the amount of computing resources required to complete a task (i.e., the "weight" of the task). In addition, and as also described herein, a controller may also more effectively assess the nature of the work already executing on a worker node or compute node, thereby enabling the controller to more accurately determine the availability of any given worker node or compute node for assignment of a new task of a given type. Further, techniques are described herein that ensure fairness in access to computing resources in multitenant computing environments, preventing any one tenant from adversely affecting workloads that another tenant seeks to complete.

These techniques are primarily described herein in the context of solutions relating to providing full-stack observability and cross-layer analytics in a computing system, such as in a data center. Such observability is often a critical component in providing adequate visibility into network operation, performance, and health. In some examples, systems described herein employ a telemetry data collector framework that retrieves telemetry data from multiple systems and stores the data for further processing. There is often a large amount of data to be collected, but techniques described herein enable the framework to scale as needed. In at least some examples, collection of data in a near or seemingly near real time manner can be important, since analytical and other processes may evaluate each datapoint and may need to act on the data quickly. Accordingly, the ability for the framework to collect data efficiently can be very important. Although techniques described herein are often described in the context of data collection for use in observability solutions, such techniques can apply to other situations, such as relating to task management frameworks that operate in other fields.

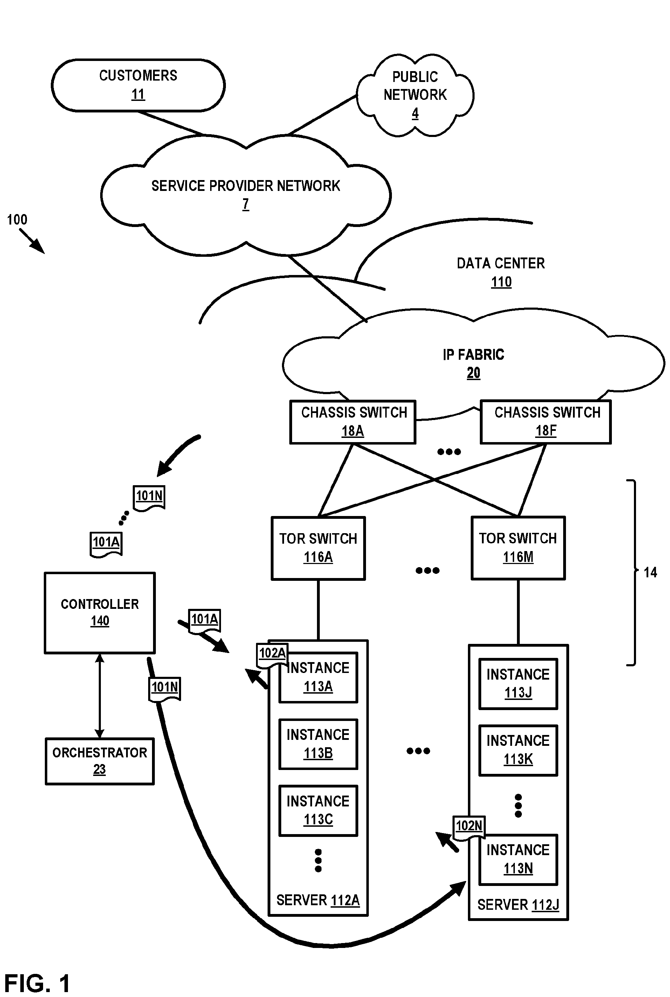

FIG. 1 is a conceptual diagram illustrating an example system for distributing tasks in a job management framework in a data center, in accordance with one or more aspects of the present disclosure. In general, data center 110 provides an operating environment for system 100. Data center 110 may represent an on premises environment, a private cloud, a hybrid cloud, or a multitenant cloud environment. In a multitenant cloud environment, applications and services operate on behalf of one or more tenant or customer sites 11 (illustrated as "customers 11") having one or more customer networks coupled to the data center by service provider network 7. Data center 110 may, for example, host infrastructure equipment, such as networking and storage systems, redundant power supplies, and environmental controls. Service provider network 7 is coupled to public network 4, which may represent one or more networks administered by other providers, and may thus form part of a large-scale public network infrastructure, e.g., the Internet. Public network 4 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

In some examples, data center 110 may represent one of many geographically distributed data centers. As illustrated in the example of FIG. 1, data center 110 may be a facility that provides network services for customers. A customer of the service provider may be a collective entity such as enterprises and governments or individuals. For example, a data center may host web services for several enterprises and end users. Other example services may include data storage, virtual private networks, traffic engineering, file service, data mining, scientific- or super- computing, and so on. Although illustrated as a separate edge network of service provider network 7, elements of data center 110 such as one or more physical network functions (PNFs) or virtualized network functions (VNFs) may be included within the service provider network 7 core.

In the example illustrated in FIG. 1, data center 110 includes storage and/or compute servers interconnected via switch fabric 14 provided by one or more tiers of physical network switches and routers, with any number of servers 112A-112J (herein, "servers 112") depicted as coupled to top-of-rack (TOR) switches 116A-116M. Servers 112 may also be referred to herein as "hosts" or "host devices." Data center 110 may include many additional servers coupled to other TOR switches 116 of the data center 110. Each of servers 112 may host one or more virtual computing or execution instances 113 (e.g., instances 113A through 113N, herein, "instances 113"), which may be containers, Kubernetes Pods of one or more containers, virtual machines, or other instances. In some cases, "compute nodes" or "worker nodes," as referenced herein, may correspond to one or more instances 113 and/or one or more servers 112.

Switch fabric 14 in the illustrated example includes interconnected top-of-rack (or other "leaf') switches 116A-116N (collectively, "TOR switches 116") coupled to a distribution layer of chassis (or "spine" or "core") routers or switches 18A-18F (collectively, "chassis switches 18"). Although not specifically shown in FIG. 1, data center 110 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. Techniques described herein may apply to any of these systems or devices.

In the example illustrated in FIG. 1, TOR switches 116 and chassis switches 18 provide servers 112 with redundant (multi-homed) connectivity to IP fabric 20 and service provider network 7. Chassis switches 18 aggregate traffic flows and provides connectivity between TOR switches 116. TOR switches 116 may be network devices that provide layer 2 (MAC) and/or layer 3 (e.g., IP) routing and/or switching functionality. TOR switches 116 and chassis switches 18 may each include one or more processors and a memory and can execute one or more software processes. Chassis switches 18 are coupled to IP fabric 20, which may perform layer 3 routing to route network traffic between data center 110 and customer sites 11 by service provider network 7. The switching architecture of data center 110 is merely an example, and other architectures are possible. Other switching architectures may have more or fewer switching layers, for instance.

Each of servers 112 may be a compute node, an application server, a storage server, or other type of server. For example, each of servers 112 may represent a computing device configured to operate according to techniques described herein. Servers 112 may provide Network Function Virtualization Infrastructure (NFVI) for an NFV architecture. Servers 112 may host endpoints for one or more virtual networks that operate over the physical network represented herein by IP fabric 20 and switch fabric 14. Although described primarily with respect to a data center-based switching network, other physical networks, such as service provider network 7, may underlay one or more virtual networks.

FIG. 1 illustrates a system in which controller 140 receives a stream of tasks 101 (i.e., tasks 101A through 101N, herein, "tasks 101")) and allocates those tasks to worker nodes or other computing resources within data center 110. In the example illustrated in FIG. 1, controllers 140 may allocate each of tasks 101 to one or more of instances 113, each executing on one of servers 112. For example, controller 140 may assign task 101A to instance 113A executing on server 112A. In general, controller 140 may assign task 101N to instance 113N, which may operate on any of servers 112. Once task 101A is assigned to instance 113A, instance 113A processes task 101A. Similarly, and in general, instance 113N processes task 101N.

Instances 113 complete tasks 101A through 101N (herein, "tasks 101") and output feedback 102A through 102N (herein, "feedback 102") to controller 140. For example, when instance 113A completes underlying task 101A, instance 113A outputs feedback 102A to controller 140. Similarly, when instance 113N completes underlying task 101N, instance 113N outputs feedback 102N to controller 140. In each case, feedback 102 may include information about the computing resources consumed when performing an underlying task 101. Feedback 102 may include information about processing cycles, memory used, other resources used, time to complete the underlying task 101, and other information about processing a given task 101. Typically, each of instances 113 communicates feedback 102 to controller 140 after the instance 113 completes the underlying task 101. However, in some situations, instances 113 may alternatively, or in addition, provide feedback 102 before a given task 101 has been fully completed.

Controller 140 collects each instance of feedback 102 and correlates each instance with the corresponding task 101. Controller 140 also determines the type of task (or "task type") that was performed. As described herein, tasks 101 may be classified as one of a number of types, where the type is associated with the nature of the task being performed. In situations where each of tasks 101 represents a process for collecting data, the type associated with a given task 101 may correspond to the type of data being collected. In other contexts, however, the type of each task 101 may otherwise depend on the nature of the task or the overall objective of the work that controller 140 or a given tenant is seeking to complete.

Controller 140 evaluates the feedback 102 associated with each of tasks 101 and determines the amount of computing resources that were consumed by the underlying task 101. Based on this information, controller 140 generates or updates a model that enables controller 140 to predict the expected amount of computing resources that will be consumed by a task of a given type. As described herein, that expected amount of computing resources may be considered the "weight" of a given task. As controller 140 receives additional tasks 101, controller 140 predicts the weight of each additional task 101 to determine how to allocate and/or assign new task 101 to one of instances 113. In some cases, controller 140 may also predict the extent to which each instance 113 is available to handle additional tasks 101. To make such a prediction, controller 140 uses information about tasks previously assigned to instances 113 to predict or determine the workload (or overall weight) of each instance 113. Based on these assessments performed by controller 140, controller 140 assigns new tasks 101 to servers 112 and/or instances 113 in an efficient manner and/or in a manner that enables efficient processing of tasks 101.

The newly assigned tasks 101 then execute, the corresponding instances 113 generate additional feedback 102, and the instances 113 send to controller 140 the additional feedback 102 about those newly assigned tasks 101. Controller 140 then uses the additional feedback 102 to further refine its capability to predict the weight of each incoming task 101 based, for example, on the type of each of tasks 101. This process may continue indefinitely. Accordingly, controller 140 may use both tasks 101 and corresponding feedback 102 as a part of a closed loop system that enables efficient distribution of tasks within data center 110 that is based on historical information about processing of tasks 101 by instances 113.

In addition, controller 140 may also use the ability to predict the weight of various tasks 101 to assess when and how to scale computing resources within data center 110. For example, controller 140 may determine that a stream of incoming tasks 101 will require additional resources (e.g., additional instances 113). In such an example, controller 140 may instantiate additional instances 113 within data center 110. Similarly, controller 140 may determine that for a stream of incoming tasks 101, the available resources within data center 110 are more than sufficient. In this latter example, controller 140 may deallocate various instances 113, making their resources available for other uses in data center 110.

In some cases, controller 140 generates predictions using a machine learning model that has been trained to predict the weight of a task 101 based on attributes of that task 101, such as the "type" of task. As described herein, the "type" of a task might involve the nature of the task to be performed or the types of resources that are used to complete the task.

In examples where controller 140 applies a machine learning model to predict a task weight, the machine learning model used by controller 140 may be trained and/or maintained by a separate computing system ("training system" - not specifically shown in FIG. 1). The machine learning model may include one or more neural networks, such as one or more of a Deep Neural Network (DNN) model, Recurrent Neural Network (RNN) model, and/or a Long Short-Term Memory (LSTM) model. In general, DNNs and RNNs learn from data available as feature vectors, and LSTMs learn from sequential data.

The training system may implement other types of machine learning to train the machine learning model. For example, the training system may apply one or more of nearest neighbor, naive Bayes, decision trees, linear regression, support vector machines, neural networks, k-Means clustering, Q-learning, temporal difference, deep adversarial networks, or other supervised, unsupervised, semi-supervised, or reinforcement learning algorithms to train the machine learning model.

The machine learning model processes training data for training the machine learning model, data for prediction, or other data. The machine learning model may in this way be trained to identify patterns in the properties of the tasks, the properties of the instances, or other factor that tends to affect resource utilization and workload over time.

Techniques described herein may provide certain technical advantages. For example, by assigning different weights to different tasks and keeping track of the weight-based load of each worker node, controller 140 may be able to achieve a more efficient and fair distribution of work. Such efficiency may be achieved through a closed loop mechanism that enables controller 140 to recalibrate the weight of various tasks and distribute workloads efficiently based on those calculated weights.

Further, the closed loop mechanism operates as a self-learning system that improves over time, tending toward an optimal distribution of tasks to worker nodes. Such a system also enables efficient and accurate determinations about when and to what extent the framework should scale in response to increasing or decreasing demand or workloads (e.g., increasing or decreasing the resources or nodes available to the framework).

Techniques described herein may also be used in multi-tenant management applications that require features like task prioritization (with fairness) and dynamic scalability. Task prioritization may be used to ensure that resources consumed by the workload of one tenant does not starve another tenant of resources.

Existing solutions task management systems tend to not distribute loads efficiently while keeping the constraints of real time processing in mind. For example, the distribution of partitions/messages to consumers within consumer group (e.g., in Kafka) is generally implemented as a round-robin in conventional solutions, making it relatively fixed for the lifetime of the consumer unless the number of consumers changes. In at least some prior solutions, therefore, prioritizing messages which need to be processed urgently (i.e., at a higher priority than others) is a challenge, since changing priority as time elapses is difficult or impossible.

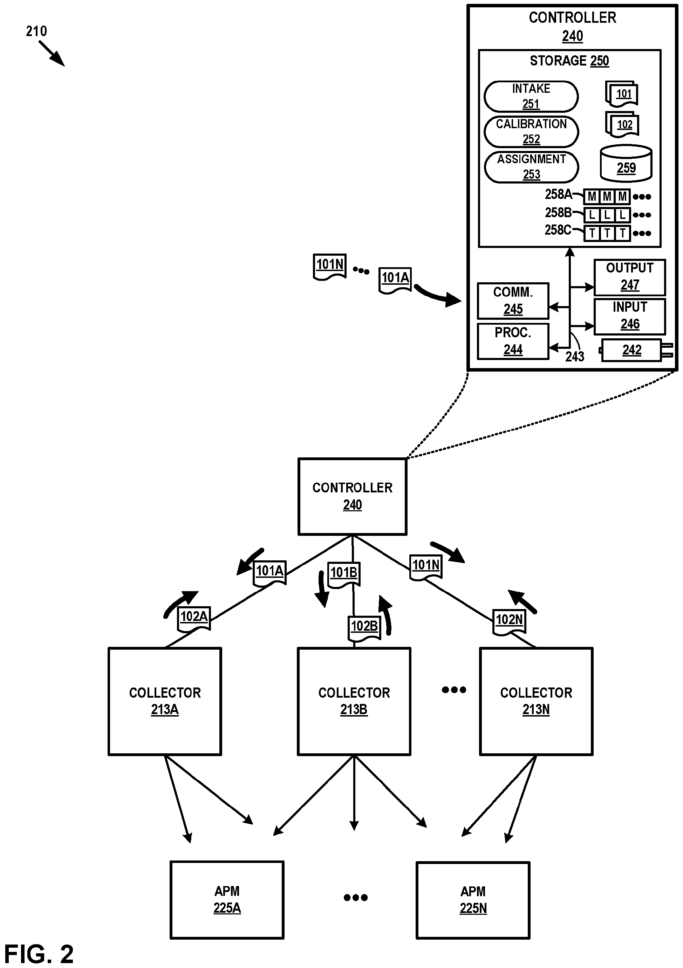

FIG. 2 is a block diagram illustrating an example system for distributing tasks to worker nodes in a computing environment, in accordance with one or more aspects of the present disclosure. Data center 210 of FIG. 2 includes some of the same elements of data center(s) 110 described in connection with FIG. 1. In FIG. 2, controller 240 may be considered an example or alternative implementation of controller 140 of FIG. 1, although other implementations are possible.

Collectors 213 illustrated in FIG. 2 may be considered example implementations of instances 113 (or servers 112) of FIG. 1. Similarly, other elements illustrated in FIG. 2 may correspond to earlier-described elements sharing the same reference numeral (e.g., tasks 101 and instances of feedback 102).

In the example of FIG. 2, data center 210 provides full-stack observability and cross-layer analytics for work being done in data center 210 by worker nodes. In FIG. 2, the worker nodes correspond to collectors 213A through 213N ("collectors 213"). Data collection performed in FIG. 2 may be used in systems that seek to provide end-to-end assurance and/or observability into network operations. As described herein, controller 240 and collectors 213 work together to retrieve telemetry data (like metrics, logs, traces) from multiple systems, such as application performance monitoring applications (i.e., APMs 225A through 225N). In FIG. 2, controller 240 distributes tasks 101 to the collectors 213, where each task specifies the type of information that should collected from a specific APM 225. Multiple collector instances (i.e., collectors 213A to 213N) can retrieve different kinds of data (like metrics, logs, traces) from APMs 225 (or other systems). Some examples of APMs 225 are applications such as NewRelic or DynaTrace.

Each collector 213 communicates with controller 240 through a bi-directional connection (e.g., a remote procedure call or RPC/gRPC), enabling the exchange of control information and other information. Whenever a new collector 213 is instantiated, that collector 213 establishes a control channel (e.g., via gRPC connection) with controller 240. Accordingly, such a connection is used to communicate tasks 101 to collectors 213, and collectors 213 may use the connection to communicate feedback 102 back to controller 240.

Controller 240 is illustrated in FIG. 2 to facilitate a description of certain components, modules, and other aspects of a computing system that may implement a system for managing task distribution. Controller 240 is also illustrated in FIG. 2 to facilitate a description of how such a computing system may operate in accordance with techniques described herein.

For ease of illustration, controller 240 is depicted in FIG. 2 as a single computing system. However, in other examples, controller 240 may be implemented through multiple devices or computing systems distributed across a data center, multiple data centers, or multiple cloud networks. For example, separate computing systems may implement functionality described herein as being performed by each of intake module 251, calibration module 252, and assignment module 253. Alternatively, or in addition, modules illustrated in FIG. 2 as included within controller 240 may be implemented through distributed virtualized compute instances (e.g., virtual machines, containers) of a data center, cloud computing system, server farm, and/or server cluster. Although shown operating within a single data center 210, controller 240 may operate outside of data center 210, and may operate to manage and/or distribute tasks across multiple data centers 210 or computing environments.

In FIG. 2, controller 240 is shown with underlying physical hardware that includes power source 242, one or more processors 244, one or more communication units 245, one or more input devices 246, one or more output devices 247, and one or more storage devices 250. Storage devices 250 may include intake module 251, calibration module 252, assignment module 253, and data store 259. Storage device 250 may also be used for storing task lists 258, although in some cases such task lists 258 may be included within data store 259. Storage devices 250 may also be used for storing tasks 101 and feedback 102.

One or more of the devices, modules, storage areas, or other components of controller 240 may be interconnected to enable inter-component communications (physically, communicatively, and/or operatively). In some examples, such connectivity may be provided by through communication channels, which may include a system bus (e.g., communication channel 243), a network connection, an inter-process communication data structure, or any other method for communicating data.

Power source 242 of controller 240 may provide power to one or more components of controller 240. Power source 242 may receive power from the primary alternating current (AC) power supply in a building, data center, or other location. In some examples, power source 242 may include a battery or a device that supplies direct current (DC). Power source 242 may have intelligent power management or consumption capabilities, and such features may be controlled, accessed, or adjusted by processors 244 to intelligently consume, allocate, supply, or otherwise manage power.

One or more processors 244 of controller 240 may implement functionality and/or execute instructions associated with controller 240 or associated with one or more modules illustrated herein and/or described herein. One or more processors 244 may be, may be part of, and/or may include processing circuitry that performs operations in accordance with one or more aspects of the present disclosure.

One or more communication units 245 of controller 240 may communicate with devices external to controller 240 by transmitting and/or receiving data, and may operate, in some respects, as both an input device and an output device. In some or all cases, communication unit 245 may communicate with other devices or computing systems over a network.

One or more input devices 246 may represent any input devices of controller 240, and one or more output devices 247 may represent any output devices of controller 240. Input devices 246 and/or output devices 247 may generate, receive, and/or process output from any type of device capable of outputting information to a human or machine. For example, one or more input devices 246 may generate, receive, and/or process input in the form of electrical, physical, audio, image, and/or visual input (e.g., peripheral device, keyboard, microphone, camera). Correspondingly, one or more output devices 247 may generate, receive, and/or process output in the form of electrical and/or physical output (e.g., peripheral device, actuator).

One or more storage devices 250 within controller 240 may store information for processing during operation of controller 240. Storage devices 250 may store program instructions and/or data associated with one or more of the modules described in accordance with one or more aspects of this disclosure. One or more processors 244 and one or more storage devices 250 may provide an operating environment or platform for such modules, which may be implemented as software, but may in some examples include any combination of hardware, firmware, and software. One or more processors 244 may execute instructions and one or more storage devices 250 may store instructions and/or data of one or more modules. The combination of processors 244 and storage devices 250 may retrieve, store, and/or execute the instructions and/or data of one or more applications, modules, or software. Processors 244 and/or storage devices 250 may also be operably coupled to one or more other software and/or hardware components, including, but not limited to, one or more of the components of controller 240 and/or one or more devices or systems illustrated or described as being connected to controller 240.

Intake module 251 may perform functions relating to receiving tasks 101 from clients or tenants in a multitenant environment or from other systems or entities. In some examples, intake module 251 receives tasks and stores the tasks within data store 259 or within one or more of task lists 258.

Calibration module 252 may perform functions relating to determining the weight of various types of tasks and/or calibrating parameters used by controller 240 to assign tasks to worker nodes, which in the context of FIG. 2, include collectors 213. In some examples, calibration module 252 may use feedback 102 to occasionally or continually update a machine learning model to predict appropriate weights for various task types.

Assignment module 253 may perform functions relating to distributing tasks to collectors 213 or other worker nodes within data center 210. In some examples, assignment module 253 may use information about task weights to determine how to distribute such tasks. Further, assignment module 253 may use information about the extent to which tenants have tasks already processing within a data center to ensure that no tenant starves another tenant of data center resources.

Data store 259 of controller 240 may represent any suitable data structure or storage medium for storing information relating to assignment and/or management of tasks and/or task types. The information stored in data store 259 may be searchable and/or categorized such that one or more modules within controller 240 may provide an input requesting information from data store 259, and in response to the input, receive information stored within data store 259. Data store 259 may be primarily maintained by intake module 251.

In operation, and in accordance with one or more aspects of the present disclosure, controller 240 may receive tasks to be performed. For instance, in an example that can be described in the context of FIG. 2, communication unit 245 of controller 240 detects input and outputs information about the input to intake module 251. Intake module 251 determines that the input corresponds to one or more tasks 101 to be processed by a computing environment (e.g., data center 210). Intake module 251 identifies, for each task, the type of task to be performed. Where data center 210 is a multitenant data center, intake module 251 may also determine for each of tasks 101 the identity of a tenant for which the task 101 is to be performed.

Controller 240 may store tasks 101 in a data structure. For instance, intake module 251 may store the task in one of task lists 258 within storage device 250. Each of task lists 258 (i.e., task lists 258A through 258C) may each store tasks having a particular type. For example, if controller 240 is assigning tasks relating to data collection from APMs 225, task list 258A may correspond to a list of tasks pertaining to collecting metrics, task list 258B may correspond to a list of tasks pertaining to collecting log information, and task list 258C may correspond to a list of tasks pertaining to collecting trace information. Although only three task lists 258 are illustrated in storage device 250 of controller 240, any number of lists or other appropriate data structures may be used. Each of task lists 258 are illustrated as being included within storage device 250, but in some examples, one or more of task lists 258 may be within data store 259.

Over time, controller 240 may receive many tasks 101 (e.g., tasks 101A through 101N, representing any number of tasks). For each such task received by controller 240, intake module 251 may determine a type and tenant associated with the task and store the 101 appropriately. In some examples, the tasks 101 received by communication unit 245 of controller 240 in FIG. 2 may correspond to the tasks 101A through 101N received, by controller 140 of FIG. 1, from various tenants or customers 11 in system 100 of FIG. 1.

Controller 240 may assign tasks to collectors 213. For instance, still continuing with the example being described in the context of FIG. 2, assignment module 253 accesses tasks 101 from one of task lists 258 (or data store 259). In one example, assignment module 253 accesses task 101A. Assignment module 253 determines that collector 213A is the least loaded of all the collectors 213. Assignment module 253 therefore assigns task 101A to collector 213A. To do so, assignment module 253 causes communication unit 245 to output information about task 101A over a network to collector 213A. Collector 213A receives task 101A and queues task 101A for processing (or processes task 101A immediately). In a similar way, assignment module 253 of controller 240 assigns each of tasks 101 by choosing a least loaded collector 213 and outputting information about each task 101 to the chosen collector 213. In some examples, particularly for assignment of initial tasks 101, assignment module 253 may assume that each task 101 corresponds to an equal amount of work, or has an equal impact on the processing resources of the collector 213 performing the task 101. As described herein, this amount of work or impact on processing resources may be referred to as the "weight" of the task 101. Accordingly, the load on each of collectors 213 may be considered the sum of the weights of the tasks 101 assigned to that collector 213.

Controller 240 may receive feedback 102 about tasks 101. For instance, again continuing with the example being described in the context of FIG. 2, collector 213A completes processing task 101A. Collector 213A outputs feedback 102Ato controller 240, providing information about the processing that was required to complete task 101A. In some examples, such as in FIG. 2 where the tasks pertain to collecting information from APMs 225, such information may include the amount of data that was collected form one or more APMs 225, the time taken to collect that data, the amount of processing resources (e.g., average utilization or memory) required to perform the collection, and other information about the processing of task 101A. Similarly, for each of tasks 101 assigned to one of collectors 213, controller 240 may receive an instance of feedback 102 upon completion of that task 101. Calibration module 252 stores information about each instance of feedback 102 in storage device 250, where each instance of feedback 102 corresponds to a different underlying task 101. For example, when collector 213A completes processing task 101A, collector 213A sends feedback 102A to controller 240. Similarly, when collector 213B completes processing task 101B, collector 213B sends feedback 102B to controller 240. And in general, when collector 213N completes processing task 101N, collector 213N sends feedback 102N to controller 240.

Controller 240 may calibrate based on feedback 102. Calibration module 252 accesses instances of feedback 102 in storage device 250. Calibration module 252 correlates each instance of received feedback 102 with one of the tasks 101. Based on the correlation, calibration module 252 determines the type of task associated with each instance of feedback 102 (e.g., metric collection, log data collection, trace data collection). Calibration module 252 determines the expected amount of processing resources that are consumed by each type of task (e.g., metric collection, log data collection, or trade data collection). In some cases, for example, certain types of task may require significantly more processing resources than other types of tasks. Initially, before sufficient feedback 102 from instances 113 has been analyzed, calibration module 252 might assume that each of tasks 101 will consume an approximately equal amount of processing resources (or require the same amount of time to complete). However, after analysis of feedback 102, calibration module 252 may determine that certain types of tasks require more processing resources (or require more time) than others. Accordingly, based on feedback 102, calibration module 252 recalibrates the expected weights associated with each type of task. Calibration module 252 determines, based on feedback 102, an updated weight associated with each type of task. In this way, calibration module 252 recalibrates the weights associated with each type of task (e.g., metric collection, log data collection, or trade data collection).

Controller 240 may assign tasks 101 based on the calibration. For instance, still with reference to FIG. 2, controller 240 continues to receive a stream of new tasks 101. Intake module 251 of controller 240 stores each received task 101 in data store 259 (and/or one of task lists 258). Assignment module 253 assigns each of tasks 101 to a least loaded collector 213. To perform the assignment, however, assignment module 253 uses the recalibrated information about the weights associated with each type of task. Accordingly, some collectors 213, after recalibration, may process fewer tasks 101 where those tasks have a higher expected weight, whereas other collectors 213 might process more task 101 that have a lower expected weight.

Controller 240 may continue to recalibrate as further feedback 102 is received. For instance, again with reference to FIG. 2, as controller 240 continues to assign additional tasks 101 to collectors 213, controller 240 receives new instances of feedback 102 associated with the assigned additional tasks 101. Calibration module 252 recalculates the weight of each type of task based on the additional feedback received. Over time, calibration module 252 may improve its ability to predict the weight of each task 101 and/or the amount of time and/or processing resources required to process each type of task. Further, to the extent that the amount of time and/or processing resources required to process each type of task changes over time, calibration module 252 may, if it continues to recalibrate based on new feedback 102 received for additional tasks 101, appropriately adjust the weights associated with each task as conditions change.

Controller 240 may scale collectors 213. For instance, assignment module 253 may determine that the number of tasks 101 that are to be processed by collector 213 is large, and that the tasks 101 could be processed more quickly and/or efficiently if one or more additional collectors 213 are instantiated. Accordingly, if assignment module 253 is able to accurately calibrate and/or predict the weight associated with each new task, assignment module 253 may also be able to accurately determine how many collectors 213 should be added to meet increased demand. In such an example, assignment module 253 identifies the number of additional collectors 213 that should be instantiated, and assignment module 253 causes controller 240 to instantiate those new collectors 213. Similarly, assignment module 253 may be able to accurately determine when the number of collectors 213 exceeds the number needed for current processing of tasks 101. In such an example, assignment module 253 identifies the number of collectors 213 that are not needed, and assignment module 253 causes controller 240 to deallocate or scale down the number of collectors 213 being used in data center 210.

Accordingly, based on the closed loop mechanism of assigning tasks, and receiving feedback about those tasks, controller 240 can accurately recalibrate over time and efficiently process tasks as needed. Such a process may operate in a relatively self-driven way, since as the recalibration process indicates that the weight of a task has, over time, increased, appropriate additional computing resources can be used to process those higher-weight tasks. Similarly, as the recalibration process indicates that the weight of a task has decreased over time, less computing resources can be assigned to process those lower-weight tasks.

Controller 240 may also ensure fairness among multiple tenants. For instance, intake module 251 may receive tasks 101 from many different tenants in a multitenant data center. In some cases, tenants that generate many tasks 101 (or higher weight tasks 101) might consume many more resources than other tenants. For example, if a first tenant has many more tasks to perform than any of a number of other tenants, the first tenant's tasks may be assigned to collectors 213 much more often than that of any of the other tenants. And if the first tenant's tasks require significant processing, that could affect the availability of processing resources for the other tenants. Accordingly, assignment module 253 may take into account the tenant associated with a particular task 101 when assigning that task to a collector 213. In some examples, assignment module 253 may delay assignment or assign a lower priority to tasks 101 associated with a tenant that may be consuming too many resources within data center 210. Such a policy may alleviate or prevent one or more tenants from starving other tenants from processing resources.

As described above, collectors 213 maintain a queue of tasks 101 and execute tasks 101. Once a task is completed, the individual collectors share with the controller information about the task, which may include the time taken to complete the task. In some examples, a heuristic approach might be as follows: in a given time interval, the time taken to complete tasks related to metric, logs and traces have values "MT," "LT," and "TT," respectively. Controller 240 calculates the weight of a task (for each different type) by considering the relative time taken for each task type (e.g., for metrics, the weight might be $= MT/(MT + LT + TT)$).

| Data | Weight |
|---|---|
| **Metric** | MT |
| **Logs** | LT |
| **Trace** | TT |

In one example, the load of a given collector 213 may be represented by the sum of the weights of individual task 101 assigned to that collector 213. The weight of a task might correspond to the weight of the data it is supposed to collect. Controller 240 uses this information to distribute tasks 101 among different collectors 213 by choosing the least loaded collector. If controller 240 needs to fetch the Metric, Logs and Trace between TimeStampA and TimeStampB, the controller may split this timeframe into different time intervals (i.e., a sliding time window), referred to as a "Delta" amount of time. In some examples, the weight of all the tasks for fetching particular data types may initially be set to 1 (i.e., equally weighted). The controller then creates the following tasks and assigns to collectors on a round-robin basis:

| Data Type | TimeStampA to TimeStampA + Delta | TimeStampA + Delta to TimeStampA + 2*Delta | ........ | TimeStampB |
|---|---|---|---|---|
| **Metric** | Collector-1 | Collector-4 | ......... | Collector-x |
| **Logs** | Collector-2 | Collector-5 | .......... | Collector-y |
| **Trace** | Collector-3 | Collector-6 | ........... | Collector-z |

| Collector | Load |
|---|---|
| **Collector-1** | <load> |
| **Collector-2** | <load> |
| **Collector-3** | <load> |

The controller may maintain a list (e.g., a doubly linked list) of the collectors, sorted based on the load. When a task is assigned to the collector, its load value is incremented, and the list is re-arranged or resorted. When a task is completed and the appropriate collector so informs the controller, the load value is decremented, and the list is re-arranged/resorted. The collector also provides information to the controller about how much data was collected and the time taken for the retrieval. This information can be used to re-evaluate the weight associated with the tasks for corresponding data type.

If a collector crashes, the controller receives an event as the control connection between the collector and the controller is broken. This enables the tasks that were assigned to the crashed collector to be assigned to other available collectors.

The controller may determine the number of collectors to be increased/decreased. For example, the controller may periodically (e.g., once a day or based on a configuration) check if the collectors need to be scaled out/in depending on the load trend. An example heuristic formula for determining the number of collectors to increase and/or decrease is outlined below:

$$W1 = \text{Weight of all tasks in the queue at time } t1$$

$$W2 = \text{Weight of all tasks in the queue at time } t2$$

$$\text{Rate of Increase (RI)} = (W2-W1) / (t2-t1)$$

Rate of Completion(RC) = (Weight of all tasks completed between t1 and t2)/(t2-t1)

$$\text{Number of Collectors} = c$$

$$\text{Avg Efficiency of Collector(E)} = RC/c$$

If the RC is too less compared to RI, then

$$\text{Number of collectors to be increased} = RI/E$$

Assume for timestamps t1 and t2, t1-t2=10, and W1=50 at t1 and W2=70 at t2.

So, RI=2
If the weight of all tasks completed between t1 and t2 = 10, RC=1

$$\text{Number of Collectors} = 5$$

$$\text{Avg Efficiency of Collector} = 0.2$$

$$\text{Number of collectors to be increased} = 2 / 0.2 = 10$$

The controller may also ensure fairness in a multi-tenant system to ensure that one tenant (with more load) should not starve another tenant. To ensure fairness, the controller may apply any of a number of different approaches, including either of the two approaches described below.

In the first approach, controller 240 is configured to modify how tasks 101 are added to each of task lists 258. In such an example, the controller, while adding a new tenant task to the list of tasks, scans the list linearly for other tasks associated with the same tenant as the new task. If the controller finds two tasks in succession that belong to the same tenant (or some configured number of tasks in succession), the controller inserts the task in between two of the tasks. Otherwise, the controller inserts the new task at the end of the list.

In a second approach, the controller may apply a formula-based algorithm that addresses both priority-based distribution (facilitating real-time data) and tenant-based distribution (fairness). In this approach, the controller initially assigns each task an equal constant weight (e.g., "W"). At time t2, the constant W is added to any incomplete tasks equal to or older than t1. Accordingly, as a task remains not completed, its weight increases over time.

The controller then initializes another value for each tenant, representing "work done" ("J"). Each time a collector completes a task, the value J is incremented either by a constant value or by the number of records processed. This way the work done for a given tenant is increased for the tenant as more and more tasks complete for that tenant. In addition, the controller assigns to each tenant a "priority value" ("P"). In some examples, a tenant paying a premium can be assigned a higher priority value (e.g., multiples of P, such as 2P, 3P, or higher).

The controller calculates a final weight, which may be used for determining the assignment order of task. For example, the final weight may, in some examples, be calculated as follows:

Final Weight = Current Task Weight (W) + (Sum of weights of all incomplete task for tenant at time T) * (1 / Work Done) * Tenant Priority (P)

Since the sum of weights of all incomplete tasks for the tenant are included in computing final weights, the tenant for which there is more pending work to be done is given higher priority. Similarly, at any point in time, the priority associated with a tenant can be bumped up to enable tasks to be processed more quickly. The task with the highest final weight is assigned next.

Modules illustrated in FIG. 2 (e.g., intake module 251, calibration module 252, and assignment module 253) and/or illustrated or described elsewhere in this disclosure may perform operations described using software, hardware, firmware, or a mixture of hardware, software, and firmware residing in and/or executing at one or more computing devices. For example, a computing device may execute one or more of such modules with multiple processors or multiple devices. A computing device may execute one or more of such modules as a virtual machine executing on underlying hardware. One or more of such modules may execute as one or more services of an operating system or computing platform. One or more of such modules may execute as one or more executable programs at an application layer of a computing platform. In other examples, functionality provided by a module could be implemented by a dedicated hardware device.

Although certain modules, data stores, components, programs, executables, data items, functional units, and/or other items included within one or more storage devices may be illustrated separately, one or more of such items could be combined and operate as a single module, component, program, executable, data item, or functional unit. For example, one or more modules or data stores may be combined or partially combined so that they operate or provide functionality as a single module. Further, one or more modules may interact with and/or operate in conjunction with one another so that, for example, one module acts as a service or an extension of another module. Also, each module, data store, component, program, executable, data item, functional unit, or other item illustrated within a storage device may include multiple components, sub-components, modules, sub-modules, data stores, and/or other components or modules or data stores not illustrated.

Further, each module, data store, component, program, executable, data item, functional unit, or other item illustrated within a storage device may be implemented in various ways. For example, each module, data store, component, program, executable, data item, functional unit, or other item illustrated within a storage device may be implemented as a downloadable or preinstalled application or "app." In other examples, each module, data store, component, program, executable, data item, functional unit, or other item illustrated within a storage device may be implemented as part of an operating system executed on a computing device.

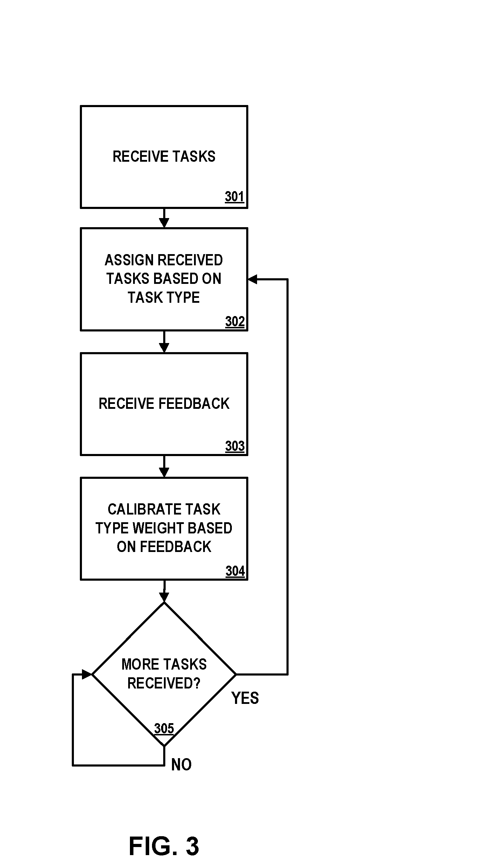

FIG. 3 is a flow diagram illustrating operations performed by an example controller, in accordance with one or more aspects of the present disclosure. FIG. 3 is described below within the context of controller 140 of FIG. 1. In other examples, operations described in FIG. 3 may be performed by one or more other components, modules, systems, or devices. Further, in other examples, operations described in connection with FIG. 3 may be merged, performed in a difference sequence, omitted, or may encompass additional operations not specifically illustrated or described.

In the process illustrated in FIG. 3, and in accordance with one or more aspects of the present disclosure, controller 140 may receive tasks (301). For example, with reference to FIG. 1, controller 140 may receive a first set of tasks 101, where each task in the first set has a task type.

Controller 140 may assign tasks based on task type (302). For example, controller 140 of FIG. 1 may assign each of the tasks 101 to compute nodes or instances 113. In some examples, particularly prior to significant task type calibration being performed, controller 140 may assume that the expected amount of processing associated with each task (e.g., the "weight" of each task) is equal. In such an example, controller 140 assigns tasks based on task type, where the task types are effectively assumed to be the same.

Controller 140 may receive feedback (303). For example, controller 140 receives feedback information from each of instances 113 that perform one of tasks 101. The feedback information provides details about processing performed by the instance 113 when completing the task (e.g., the type of task, the time taken, processing cycles used, utilization of the instance 113 or server 112 performing the task).

Controller 140 may calibrate task type weight based on feedback (304). For example, controller 140 analyzes the feedback and uses the received feedback (and other feedback) to generate (or update) a model to predict, based on the type of task, the amount of processing required to perform each type of task (e.g., the "weight" of the task).

Controller 140 may wait for additional tasks (305), and when additional tasks are received (YES path from 305), controller 140 may assign the tasks based on task type (302). For example, controller 140 of FIG. 1 receives a second set of tasks, each having a task type. Controller 140 predicts the weight of each of the tasks in the second set based on the feedback 102 received when processing the first set of tasks 101 (or based on feedback 102 received when processing earlier tasks). Controller 140 assigns each of the tasks 101 in the second set to instances 113, based on the predicted weight of each of tasks 101 in the second set. The assignment may be performed in a way to maximize efficient processing. This process of calibration based on feedback and further assignment of tasks after calibration may continue as additional tasks or sets of tasks are received, enabling controller 140 to further refine, based on additional feedback 102 received for such additional tasks, its ability to predict the weight of a given task. Also, for a multitenant environment, controller 140 may also assign tasks in a way to ensure that no one tenant consumes resources in a way that might adversely affect the tasks to be executed on behalf of other tenants.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The disclosures of all publications, patents, and patent applications referred to herein are hereby incorporated by reference. To the extent that any material that is incorporated by reference conflicts with the present disclosure, the present disclosure shall control.

For ease of illustration, only a limited number of devices (e.g., controller 140, servers 112, collectors 213, APMs 225, as well as others) are shown within the Figures and/or in other illustrations referenced herein. However, techniques in accordance with one or more aspects of the present disclosure may be performed with many more of such systems, components, devices, modules, and/or other items, and collective references to such systems, components, devices, modules, and/or other items may represent any number of such systems, components, devices, modules, and/or other items.

The Figures included herein each illustrate at least one example implementation of an aspect of this disclosure. The scope of this disclosure is not, however, limited to such implementations. Accordingly, other example or alternative implementations of systems, methods or techniques described herein, beyond those illustrated in the Figures, may be appropriate in other instances. Such implementations may include a subset of the devices and/or components included in the Figures and/or may include additional devices and/or components not shown in the Figures.

The detailed description set forth above is intended as a description of various configurations and is not intended to represent the only configurations in which the concepts described herein may be practiced. The detailed description includes specific details for the purpose of providing a sufficient understanding of the various concepts. However, these concepts may be practiced without these specific details. In some instances, well-known structures and components are shown in block diagram form in the referenced figures in order to avoid obscuring such concepts.

Accordingly, although one or more implementations of various systems, devices, and/or components may be described with reference to specific Figures, such systems, devices, and/or components may be implemented in a number of different ways. For instance, one or more systems illustrated separately may alternatively be implemented as a single system; one or more components illustrated as separate components may alternatively be implemented as a single component. Also, in some examples, one or more systems illustrated in the Figures herein as a single system may alternatively be implemented as multiple systems; one or more components illustrated as a single component may alternatively be implemented as multiple components. Each of such multiple systems and/or components may be directly coupled via wired or wireless communication and/or remotely coupled via one or more networks. Also, one or more systems or components that may be illustrated in various Figures herein may alternatively be implemented as part of another system or component not shown in such Figures. In this and other ways, some of the functions described herein may be performed via distributed processing by two or more systems or components.

Further, certain operations, techniques, features, and/or functions may be described herein as being performed by specific components, systems, and/or modules. In other examples, such operations, techniques, features, and/or functions may be performed by different components, systems, or modules. Accordingly, some operations, techniques, features, and/or functions that may be described herein as being attributed to one or more components, systems, or modules may, in other examples, be attributed to other components, systems, and/or modules, even if not specifically described herein in such a manner.

Although specific advantages have been identified in connection with descriptions of some examples, various other examples may include some, none, or all of the enumerated advantages. Other advantages, technical or otherwise, may become apparent to one of ordinary skill in the art from the present disclosure. Further, although specific examples have been disclosed herein, aspects of this disclosure may be implemented using any number of techniques, whether currently known or not, and accordingly, the present disclosure is not limited to the examples specifically described and/or illustrated in this disclosure.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, or optical disk storage, magnetic disk storage, or other magnetic storage devices, flash memory, or any other medium that can be used to store desired program code in the form of instructions or data structures and that can be accessed by a computer. Also, any connection may properly be termed a computer-readable medium. For example, if instructions are transmitted from a website, server, or other remote source using a wired (e.g., coaxial cable, fiber optic cable, twisted pair) or wireless (e.g., infrared, radio, and microwave) connection, then the wired or wireless connection is included in the definition of medium. It should be understood, that as used herein, computer-readable storage media and data storage media do not include connections, carrier waves, signals, or other transient media, but are instead directed to non-transient, tangible storage media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structure or any other structure suitable for implementation of the techniques described. In addition, in some examples, the functionality described may be provided within dedicated hardware and/or software modules. Also, the techniques could be fully implemented in one or more circuits or logic elements.

The techniques of this disclosure may be implemented in a wide variety of devices or apparatuses, including, to the extent appropriate, a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

Therefore, from one perspective, there have been described approaches for job management. Job management solutions often involve a controller distributing tasks to worker nodes or worker nodes in an efficient manner. In one example, this disclosure describes a method that includes receiving, by a controller, a first set of tasks; assigning, by the controller, each of the tasks in the first set of tasks to worker nodes for processing by the worker nodes; receiving, by the controller and for at least some of the tasks in the first set of tasks, feedback information; determining, by the controller and based on the feedback information, an expected amount of processing associated with each task type in the plurality of task types; receiving, by the controller, a second set of tasks; and assigning, by the controller and based on the expected amount of processing associated with each task type, each of the tasks in the second set of tasks to the worker nodes for processing.

Clause 1. A method comprising: receiving, by a controller, a first set of tasks, wherein each task in the first set of tasks has a task type that is one of a plurality of task types; assigning, by the controller, each of the tasks in the first set of tasks to worker nodes for processing by the worker nodes; receiving, by the controller and for at least some of the tasks in the first set of tasks, feedback information about the processing by the worker nodes; determining, by the controller and based on the feedback information, an expected amount of processing associated with each task type in the plurality of task types; receiving, by the controller, a second set of tasks, wherein each task in the second set of tasks has a task type that is one of the plurality of task types; and assigning, by the controller and based on the expected amount of processing associated with each task type, each of the tasks in the second set of tasks to the worker nodes for processing.

Clause 2. The method of clause 1, the method further comprising: storing, by the controller, information about tasks assigned to each of the plurality of worker nodes.

Clause 3. The method of clause 2, wherein assigning each of the tasks in the second set of tasks includes: assigning each of the tasks in the second set of tasks further based on the information about tasks assigned to each of the plurality of worker nodes.

Clause 4. The method of clause 2 or 3, wherein storing information about tasks assigned to each of the plurality of worker nodes includes: storing information about the type associated with each of the tasks assigned to each of the plurality of worker nodes.

Clause 5. The method of clause 4, wherein assigning each of the tasks in the second set of tasks further includes: assigning each of the tasks in the second set of tasks further based on the information about the type associated with each of the tasks assigned to each of the plurality of worker nodes.

Clause 6. The method of any preceding clause, wherein the worker nodes are included within a multitenant computing environment, wherein the tasks in the first set of tasks are each associated with one of the tenants in the multitenant computing environment, and wherein assigning each of the tasks in the second set of tasks further includes:

assigning each of the tasks in the second set of tasks further based on information about the tenant associated with each of the tasks assigned to each of the plurality of worker nodes to ensure access to worker nodes by each of the tenants in the multitenant computing environment.

Clause 7. The method of any preceding clause, further comprising: determining, by the controller and based on the feedback information and the second set of tasks, that instantiating an additional worker node will enable more efficient processing of the second set of tasks; and instantiating, by the controller, the additional worker node.

Clause 8. The method of any preceding clause, wherein each of the worker nodes executes within a compute node, and wherein the method further comprises: determining, by the controller and based on the feedback information and the second set of tasks, that processing of the second set of tasks can be performed efficiently with fewer worker nodes; and deallocating, by the controller, one of the worker nodes.

Clause 9. The method of any preceding clause, wherein determining an expected amount of processing associated with each task type includes: determining a weight associated with each task type.

Clause 10. The method of any preceding clause, wherein receiving the first set of tasks includes: receiving a set of tasks associated with collection of data from a plurality of application performance monitoring systems.

Clause 11. A computing system comprising processing circuitry and a storage device, wherein the processing circuitry has access to the storage device and is configured to: receive a first set of tasks, wherein each task in the first set of tasks has a task type that is one of a plurality of task types; assign each of the tasks in the first set of tasks to worker nodes for processing by the worker nodes; receive, for at least some of the tasks in the first set of tasks, feedback information about the processing by the worker nodes; determine, based on the feedback information, an expected amount of processing associated with each task type in the plurality of task types; receive a second set of tasks, wherein each task in the second set of tasks has a task type that is one of the plurality of task types; and assign, based on the expected amount of processing associated with each task type, each of the tasks in the second set of tasks to the worker nodes for processing.

Clause 12. The computing system of clause 11, wherein the processing circuitry is further configured to: store information about tasks assigned to each of the plurality of worker nodes.

Clause 13. The computing system of clause 12, wherein to assign each of the tasks in the second set of tasks, the processing circuitry is further configured to: assign each of the tasks in the second set of tasks further based on the information about tasks assigned to each of the plurality of worker nodes.

Clause 14. The computing system of clause 12 or 13, wherein to store information about tasks assigned to each of the plurality of worker nodes, the processing circuitry is further configured to: store information about the type associated with each of the tasks assigned to each of the plurality of worker nodes.

Clause 15. The computing system of clause 14, wherein to assign each of the tasks in the second set of tasks, the processing circuitry is further configured to: assign each of the tasks in the second set of tasks further based on the information about the type associated with each of the tasks assigned to each of the plurality of worker nodes.

Clause 16. The computing system of any of clauses 11 to 15, wherein the worker nodes are included within a multitenant computing environment, wherein the tasks in the first set of tasks are each associated with one of the tenants in the multitenant computing environment, and wherein to assign each of the tasks in the second set of tasks, the processing circuitry is further configured to: assign each of the tasks in the second set of tasks further based on information about the tenant associated with each of the tasks assigned to each of the plurality of worker nodes.

Clause 17. The computing system of any of clauses 11 to 16, wherein the processing circuitry is further configured to: determine, based on the feedback information and the second set of tasks, that instantiating an additional worker node will enable more efficient processing of the second set of tasks; and instantiate the additional worker node.

Clause 18. The computing system of any of clauses 11 to 17, wherein the processing circuitry is further configured to: determine, based on the feedback information and the second set of tasks, that processing of the second set of tasks can be performed efficiently with less worker nodes; and deallocate one of the worker nodes executing within a compute node.

Clause 19. The computing system of any of clauses 11 to 18, wherein determining an expected amount of processing associated with each task type, the processing circuitry is further configured to: determine a weight associated with each task type.

Clause 20. One or more computer-readable media comprising instructions that, when executed, configure processing circuitry of a computing system to: receive a first set of tasks, wherein each task in the first set of tasks has a task type that is one of a plurality of task types; assign each of the tasks in the first set of tasks to worker nodes for processing by the worker nodes; receive, for at least some of the tasks in the first set of tasks, feedback information about the processing by the worker nodes; determine, based on the feedback information, an expected amount of processing associated with each task type in the plurality of task types; receive a second set of tasks, wherein each task in the second set of tasks has a task type that is one of the plurality of task types; and assign, based on the expected amount of processing associated with each task type, each of the tasks in the second set of tasks to the worker nodes for processing.

**Claims**

1.  A method comprising:

    receiving, by a controller, a first set of tasks, wherein each task in the first set of tasks has a task type that is one of a plurality of task types;
    assigning, by the controller, each of the tasks in the first set of tasks to worker nodes for processing by the worker nodes;
    receiving, by the controller and for at least some of the tasks in the first set of tasks, feedback information about the processing by the worker nodes;
    determining, by the controller and based on the feedback information, an expected amount of processing associated with each task type in the plurality of task types;
    receiving, by the controller, a second set of tasks, wherein each task in the second set of tasks has a task type that is one of the plurality of task types; and
    assigning, by the controller and based on the expected amount of processing associated with each task type, each of the tasks in the second set of tasks to the worker nodes for processing.

2.  The method of claim 1, the method further comprising:
    storing, by the controller, information about tasks assigned to each of the plurality of worker nodes.

3.  The method of claim 2, wherein assigning each of the tasks in the second set of tasks includes:
    assigning each of the tasks in the second set of tasks further based on the information about tasks assigned to each of the plurality of worker nodes.

4.  The method of any of claims 2-3, wherein storing information about tasks assigned to each of the plurality of worker nodes includes:
    storing information about the type associated with each of the tasks assigned to each of the plurality of worker nodes.

5.  The method of claim 4, wherein assigning each of the tasks in the second set of tasks further includes:
    assigning each of the tasks in the second set of tasks further based on the information about the type associated with each of the tasks assigned to each of the plurality of worker nodes.

6.  The method of any of claims 1-5, wherein the worker nodes are included within a multitenant computing environment, wherein the tasks in the first set of tasks are each associated with one of the tenants in the multitenant computing environment, and wherein assigning each of the tasks in the second set of tasks further includes:
    assigning each of the tasks in the second set of tasks further based on information about the tenant associated with each of the tasks assigned to each of the plurality of worker nodes to ensure access to worker nodes by each of the tenants in the multitenant computing environment.

7.  The method of any of claims 1-6, further comprising:

    determining, by the controller and based on the feedback information and the second set of tasks, that instantiating an additional worker node will enable more efficient processing of the second set of tasks; and
    instantiating, by the controller, the additional worker node.

8.  The method of any of claims 1-7, wherein each of the worker nodes executes within a compute node, and wherein the method further comprises:

    determining, by the controller and based on the feedback information and the second set of tasks, that processing of the second set of tasks can be performed efficiently with fewer worker nodes; and
    deallocating, by the controller, one of the worker nodes.

9.  The method of any of claims 1-8, wherein determining an expected amount of processing associated with each task type includes:
    determining a weight associated with each task type.

10. The method of any of claims 1-9, wherein receiving the first set of tasks includes:
    receiving a set of tasks associated with collection of data from a plurality of application performance monitoring systems.

11. A computing system comprising processing circuitry and a storage device, wherein the processing circuitry has access to the storage device and is configured to:

receive a first set of tasks, wherein each task in the first set of tasks has a task type that is one of a plurality of task types;
assign each of the tasks in the first set of tasks to worker nodes for processing by the worker nodes;
receive, for at least some of the tasks in the first set of tasks, feedback information about the processing by the worker nodes;
determine, based on the feedback information, an expected amount of processing associated with each task type in the plurality of task types;
receive a second set of tasks, wherein each task in the second set of tasks has a task type that is one of the plurality of task types; and
assign, based on the expected amount of processing associated with each task type, each of the tasks in the second set of tasks to the worker nodes for processing.

12. The computing system of claim 11, wherein the processing circuitry is configured to include functionality corresponding to the steps recited in any of claims 2-10.

13. One or more computer-readable media comprising instructions that, when executed, cause one or more processors of a system to perform the method of any of claims 1-10.

**FIG. 1**

FIG. 2

RECEIVE TASKS

301

ASSIGN RECEIVED
TASKS BASED ON
TASK TYPE

302

RECEIVE FEEDBACK

303

CALIBRATE TASK
TYPE WEIGHT BASED
ON FEEDBACK

304

MORE TASKS
RECEIVED?

305

YES

NO

FIG. 3

Europäisches
Patentamt
European
Patent Office
Office européen
des brevets

# EUROPEAN SEARCH REPORT

**Application Number**

EP 24 21 5913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/176918 A1 (ARONOVICH LIOR [CA] ET AL) 8 June 2023 (2023-06-08)<br>* figures 1,4A,4B *<br>* paragraph [0049] - paragraph [0053] *<br>* paragraph [0060] - paragraph [0062] *<br>* paragraph [0055] - paragraph [0057] *<br>* paragraph [0046] - paragraph [0047] *<br>* paragraph [0056] - paragraph [0058] *<br>- - - - - | 1-13 | INV.<br>G06F9/48<br>G06F9/50<br>H04L47/83 |
| X | US 2022/124009 A1 (METSCH THIJS [DE] ET AL) 21 April 2022 (2022-04-21)<br>* figures 13,14 *<br>* paragraph [0182] *<br>* paragraph [0191] *<br>* paragraph [0175] *<br>* paragraph [0192] *<br>- - - - - | 1-13 | |
| X | US 2009/254914 A1 (SUNDARESAN NAGARAJ [US] ET AL) 8 October 2009 (2009-10-08)<br>* figures 1,2,3 *<br>* paragraph [0035] - paragraph [0044] *<br>* paragraph [0051] *<br>* paragraph [0014] *<br>* paragraph [0048] *<br>- - - - - | 1-13 | **TECHNICAL FIELDS SEARCHED (IPC)**<br><br>G06F<br>H04L |
| A | WO 2023/197316 A1 (BAIDU COM TIMES TECH BEIJING CO LTD [CN]; BAIDU USA LLC [US]) 19 October 2023 (2023-10-19)<br>* figures 2,3,5a,5b,5c,7 *<br>- - - - - | 1-13 | |

The present search report has been drawn up for all claims

| Place of search | Date of completion of the search | Examiner |
|---|---|---|
| The Hague | 1 May 2025 | Suzic, Bojan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 21 5913

This annex lists the patent family members relating to the patent documents cited in the above-mentioned European search report.
The members are as contained in the European Patent Office EDP file on
The European Patent Office is in no way liable for these particulars which are merely given for the purpose of information.

01-05-2025

| Patent document cited in search report | Publication date | Patent family member(s) | Publication date |
|---|---|---|---|
| US 2023176918 A1 | 08-06-2023 | US 2023176918 A1 | 08-06-2023 |
|  |  | WO 2023103681 A1 | 15-06-2023 |
| US 2022124009 A1 | 21-04-2022 | CN 117501246 A | 02-02-2024 |
|  |  | DE 102022212115 A1 | 17-05-2023 |
|  |  | DE 102022212157 A1 | 17-05-2023 |
|  |  | EP 4433895 A1 | 25-09-2024 |
|  |  | KR 20230073371 A | 25-05-2023 |
|  |  | KR 20230073372 A | 25-05-2023 |
|  |  | US 2022113790 A1 | 14-04-2022 |
|  |  | US 2022114251 A1 | 14-04-2022 |
|  |  | US 2022116455 A1 | 14-04-2022 |
|  |  | US 2022121455 A1 | 21-04-2022 |
|  |  | US 2022124005 A1 | 21-04-2022 |
|  |  | US 2022124009 A1 | 21-04-2022 |
|  |  | US 2024235959 A1 | 11-07-2024 |
|  |  | WO 2023091036 A1 | 25-05-2023 |
| US 2009254914 A1 | 08-10-2009 | NONE |  |
| WO 2023197316 A1 | 19-10-2023 | CN 117242432 A | 15-12-2023 |
|  |  | US 2024185098 A1 | 06-06-2024 |
|  |  | WO 2023197316 A1 | 19-10-2023 |

EPO FORM P0459

For more details about this annex : see Official Journal of the European Patent Office, No. 12/82

**EP 4 579 455 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 40034923